# EUROPEAN PATENT SPECIFICATION

(11) **EP 1 369 040 B1**
(45) Date of publication and mention of the grant of the patent: **21.11.2007**
(21) Application number: 03253277.2
(22) Date of filing: 23.05.2003
(51) Int. Cl.: A23B 4/023, A23B 4/12, A23B 4/16, A21D 15/04, A23B 7/144, A23B 7/154, A23B 7/153, A23B 7/152, B01F 3/04, A23B 7/158, A23L 3/3589

(54) **Method of using non-volatile microbiocidal application agents**
Verfahren zur Verwendung von nichtflüchtigen mikrobioziden Mitteln
Procédé d'utilisation d'agents microbiocides non-volatiles

(30) Priority: 06.06.2002 US 164159
(43) Date of publication of application: 10.12.2003
(73) Proprietor: THE BOC GROUP, INC., New Providence, NJ 07974-2082 (US)
(72) Inventor: Newman, Michael Duane, Hillsborough, New Jersey 08844 (US); McCormick, Stephen Allen, Warrington, Pennsylvania 18976 (US); Dresselhaus, Helmut, Brookfield 4069 (AU)
(74) Representative: Wickham, Michael

(56) References cited:
- WO-A-00/48469
- CA-A- 2 297 002

## Description

### BACKGROUND OF THE INVENTION

The invention relates generally to the application of microbiocidal substances to food products. More particularly, the invention relates to the preparation and the use of non-volatile microbiocidal substances as agents for the treatment of food products.

The preservation of perishable products has been, and continues to be, the focus of considerable commercial interest. By extending the shelf life of a food product, economic value can be added to that food product. Approaches to this end are many and varied (e.g., tight control of storage conditions, packaging, post and *in situ* applications of preservatives) and various combinations of these and other techniques are known and in practice to one extent or another.

In the context of one particular group of food products, namely baked goods (e.g., muffins, crumpets, scones, bagels, cookies, breads, etc.), all of the above techniques are in use. For example, baked goods can be placed in frozen or refrigerated storage, covered with anaerobic packaging, and/or supplemented by the addition of preservatives. When such preservatives are used, the preservative can be added to either a batter or a mix from which the baked goods are prepared. Also, the preservative can be applied to finished baked goods. With respect to the finished baked goods, application of a small amount of the preservative can extend the shelf life of the baked goods from a typical 6-8 days to an extended 14-16 days when all other conditions (e.g., packaging, storage conditions), are equal. These preservatives can include a wide variety of substances (i.e., microbiocidal substances, antimicrobial substances, etc.) such as acetic acid, carbonic acid, mixtures thereof.

The nature of conventional microbiocidal agents and their application requires elaborate and costly equipment to be used in order to accommodate them. The additional measures required during the design, fabrication, installation and use of equipment to be used with such substances can decrease the efficiency and increase the cost of a microbiocidal application process. For example, in order to use volatile substances, the following must be observed: explosion-proof components must be used, adding tremendous cost to the application system; specific procedures must be observed when storing the volatile gases, such storage oftentimes occurring off-site and out of the direct control of the supplier of the volatile substances; and detailed control and strict systems must be implemented to prevent leakage and prevent exposure to those in working with the volatile substances. The leakage of volatile substances can pose a significant risk to plant personnel.

It would be beneficial if the use of volatile substances as microbiocidal agents could be reduced or eliminated. Further, it would be desirable to provide a microbiocidal agent food treatment system that uses a non-volatile substance as the microbiocidal agent.

Thus, a method for providing treatment to a food product with a nonvolatile gas would be highly desirable since such a method would eliminate the need for a volatile gas in the treatment process.

CA-A-2 297002 discloses an aerosol spray apparatus in the form of an aerosol can containing a liquid disinfectant composition comprising an antimicrobial agent, for example, hydrogen peroxide, and a flash vaporization component, for example, ethanol. The aerosol can contains a gaseous propellant such as carbon dioxide.

A nozzle arrangement is employed of a kind in which manual operation of a lever or push button opens the nozzle and causes the liquid to be dispensed under the pressure of the gaseous propellant. The flash vaporization component vaporizes on release of the pressure, thus causing the antimicrobial agent to atomise.

WO-A-00/48469 discloses a liquid composition for the cleaning of fruit and vegetables. The composition is applied as a liquid and may include lactic acid.

### SUMMARY OF THE INVENTION

According to the present invention there is provided a method of treating a food product, comprising the steps of
providing a non-volatile liquid microbiocidal agent;
atomising the non-volatile liquid microbiocidal agent;
combining the non-volatile liquid microbiocidal agent with a carrier gas to form a non-volatile microbiocidal agent-carrier gas formation;
heating the atomized non-volatile liquid microbiocidal agent so as to vaporize it prior to applying the non-volatile microbiocidal agent;
delivering the non-volatile microbiocidal agent-carrier gas formation to application.equipment; and
applying the non-volatile microbiocidal agent-carrier gas formation with the application equipment to the food product.

Various other features, objects and advantages of the present invention will be made apparent from the following detailed description and the drawings.

### BRIEF DESCRIPTION OF THE DRAWINGS

Embodiments of the invention are disclosed with reference to the accompanying drawings and are for illustrative purposes only. The invention is not limited in its application to the details of construction, or the arrangement of the components, illustrated in the drawings. The invention is capable of other embodiments or of being practiced or carried out in other various ways.

The drawings illustrate at least one mode presently contemplated for carrying out the invention.

In the drawings:
Figure 1 illustrates a schematic flow diagram of a process for preparing a baked food product;
Figure 2 illustrates a schematic flow diagram of another process for preparing a baked food product; and
Figure 3 illustrates a schematic flow diagram of one treatment fluid generation system that may be used with the present invention;

### DETAILED DESCRIPTION OF THE PREFERRED EMBODIMENTS

Although the present invention is described below in the context of applying a treatment fluid containing a preservative (e.g., a mixture of carbon dioxide and a non-volatile microbiocidal substance) to a baked good, the invention can also be employed with, and has applicability to, many different application processes.

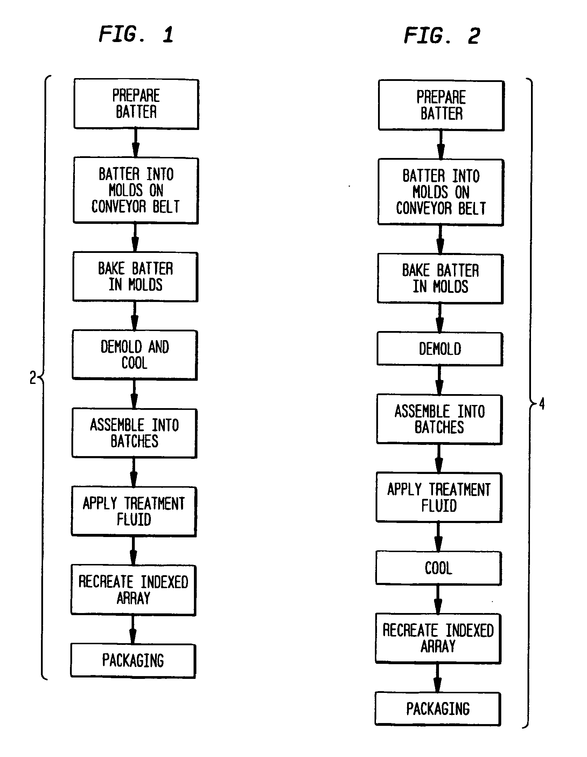

Referring to Figure 1, an outline 2 is illustrated for preparation of commercial quantities of a food product, namely a baked good (e.g., muffin, crumpet, scone, bagel, cookie, bread). Batter is prepared and then poured into molds that are either carried on, or form a part of, a conveyor mechanism. The conveyor mechanism moves the batter through a baking zone in which the batter is fully baked.

Upon leaving the baking zone, the baked good is de-molded, typically onto a second conveyor mechanism. The de-molding procedure typically deposits the baked goods upon the second conveyor mechanism such that the baked goods are arranged in an indexed array. The indexed array of baked goods are then conveyed through a cooling tunnel to bring the baked goods to a temperature appropriate for packaging (e.g., room temperature or slightly above).

In some instances as illustrated in Figure 1, prior to packaging, the baked goods will pass through a treatment apparatus. Prior to encountering the treatment apparatus, the baked goods are assembled into batches. In batches, the baked goods are transported through the treatment apparatus where a treatment fluid containing a preservative is applied to an external surface of the baked goods. Typical preservatives can include a wide variety of substances (i.e., microbiocidal substances, antimicrobial substances). Preservatives have the ability to radically reduce the pH of food products and, as such, can eradicate and/or eliminate bacteria present within the food product. The treatment fluid can include a preservative or a mixture containing the preservative. For example, a vaporized mixture of carbon dioxide and an application agent can be employed as the treatment fluid.

In other instances, as illustrated by outline 4 in Figure 2, placement of the cooling tunnel and the treatment apparatus are reversed. In other words, the baked goods are de-molded, assembled into batches, treated with the treatment fluid, cooled, restored to the indexed array, and then packaged.

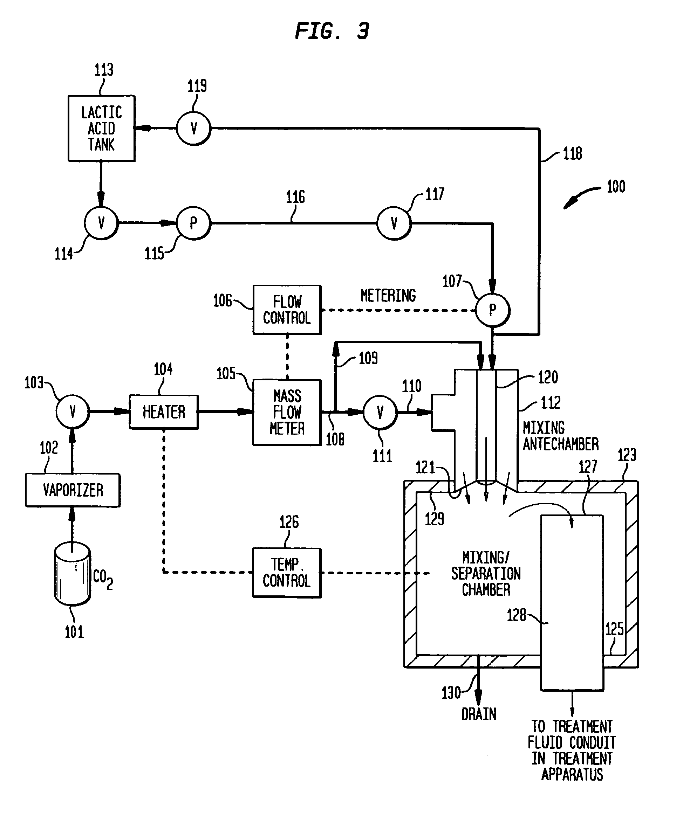

Figure 3 shows an example of an application agent preparation system 100 that can be adapted for use with the present invention. System 100 is capable of mixing a carrier gas and vaporized liquid with little, if any, entrained droplets. In system 100, tank 101 holds liquid carbon dioxide, typically at about 2170 kPa (300 psig). Liquid carbon dioxide is transferred to vaporizer 102 and converted to a gas substantially free of any droplets. The gas is then passed through pressure reduction valve 103 and the pressure of the gas is reduced from 2170 kPa (300 psig) to 790 kPa (100 psig). The gaseous CO₂ is then transferred to heater 104 and heated to substantially the same temperature as the contents of mixing/separation chamber 123 (e.g. 60°C (140° F)). Temperature control unit 126 coordinates the temperature of heater 104 and of chamber 123. From heater 104, the gaseous carbon dioxide at 790 kPa (100 psig) is transferred to mass flow meter 105, which is controlled by flow control 106. As long as pump 107 is in proper operation, flow control 106 allows carbon dioxide to move from mass flow meter 105 into pipe 108. Pipe 108 divides into pipes 109 and 110. While the amount of carbon dioxide each of pipes 109 and 110 will carry can vary to convenience, typically pipe 109 will carry about 10 percent and pipe 110 will carry the remaining about 90 percent by weight of the carbon dioxide. The stream of carbon dioxide passing through in pipe 110 can also pass through control valve 111 before entering mixing antechamber 112.

Liquid acid, such as lactic acid, is removed from tank 113 through check valve 114 by the action of pump 115. When lactic acid is used, the liquid lactic acid moves through line 116 and valve 117 into metering pump 107. If atomization nozzle 120 is operational, then the liquid lactic acid is fed into the atomization nozzle where the liquid lactic acid is atomized with carbon dioxide delivered to the nozzle through line 109. If atomization nozzle 120 is not operative, then the liquid lactic acid is returned to tank 113 by way of line 118 and check valve 119.

Atomized lactic acid is transferred from atomization nozzle 120 into the upper section of mixing/separation chamber 123 in which it is vaporized by contact with carbon dioxide delivered from mixing antechamber 112 through orifice plate 121. The carbon dioxide delivered from line 110 into antechamber 112 passes through pressure reduction valve 111 in which the pressure of the carbon dioxide is reduced from 790 kPa (100 psig) to about 135 kPa (5 psig). The pressure of the atomized lactic acid as delivered to mixing/separation chamber 123 is also about 135 kPa (5 psig). The temperature, pressure and volume of carbon dioxide introduced into the upper section of mixing/separation chamber 123 is sufficient such that the atomized lactic acid is essentially completely vaporized upon contact with it.

Atomization nozzle 120 passes through antechamber 112 and orifice plate 121, and opens into the upper section of mixing/separation chamber 123. Atomization nozzle 120 can extend into the upper section of mixing/separation chamber 123 to any convenient length, but typically the end of the nozzle is flush with or extends only a short distance beyond orifice plate 121.

## Claims

1. A method of treating a food product, comprising the steps of
providing a non-volatile liquid microbiocidal agent;
atomising the non-volatile liquid microbiocidal agent;
combining the non-volatile liquid microbiocidal agent with a carrier gas to form a non-volatile microbiocidal agent-carrier gas formation;
heating the atomized non-volatile liquid microbiocidal agent so as to vaporize it prior to applying the non-volatile microbiocidal agent;
delivering the non-volatile microbiocidal agent-carrier gas formation to application equipment; and
applying the non-volatile microbiocidal agent-carrier gas formation with the application equipment to the food product.

2. A method according to claim 1, wherein the non-volatile microbiocidal agent comprises lactic acid.

3. A method according to claim 1 or claim 2, wherein the carrier gas includes a gas selected from the group consisting of carbon dioxide and nitrogen.

## Patentansprüche

1. Verfahren zur Behandlung eines Nahrungsmittelprodukts, mit folgenden Schritten:
Bereitstellen eines nichtflüchtigen flüssigen mikrobioziden Agens ,
Zerstäuben des nichtflüchtigen flüssigen mikrobioziden Agens ,
Kombinieren des nichtflüchtigen flüssigen mikrobioziden Agens mit einem Trägergas zur Bildung einer nichtflüchtigen mikrobioziden Agens -Trägergas-Formation,
Erwärmen des zerstäubten nichtflüssigen mikrobioziden Agens so, dass dies vor dem Aufspringen des nichtflüchtigen mikrobioziden Agens verdampft wird,
Befördern der nichtflüchtigen mikrobioziden Agens -Trägergas-Formation zur Anwcndungseinrichtung, und
Aufbringen der nichtflüchtigen mikrobioziden Agens -Trägergas-Formation mit der Aufbringeinrichtung auf das Nahrungsmittelprodukt.

2. Verfahren nach Anspruch 1, wobei das nichtflüchtige mikrobioziden Agens Milchsäure umfasst.

3. Verfahren nach Anspruch 1 oder Anspruch 2, wobei das Trägergas ein Gas enthält, das aus der Gruppe Kohlendioxid und Stickstoff ausgewählt ist.

## Revendications

1. Procédé de traitement d'un produit alimentaire, comprenant les étapes consistant à :
fournir un agent microbicide liquide non volatil ;
atomiser l'agent microbicide liquide non volatil ;
combiner l'agent microbicide liquide non volatil avec un gaz vecteur pour former un système agent microbicide liquide non volatil-gaz vecteur ;
chauffer l'agent microbicide liquide non volatil atomisé afin de le vaporiser avant d'appliquer l'agent microbicide non volatil ;
fournir le système agent microbicide liquide non volatil-gaz vecteur à un équipement d'application ; et
appliquer sur le produit alimentaire, le système agent microbicide liquide non volatil-gaz vecteur avec l'équipement d'application.

2. Procédé selon la revendication 1, dans lequel l'agent microbicide non volatil comprend de l'acide lactique.

3. Procédé selon la revendication 1 ou la revendication 2, dans lequel le gaz vecteur comprend un gaz choisi dans le groupe constitué par le dioxyde de carbone et l'azote.
